# EUROPÄISCHE PATENTSCHRIFT

(11) **EP 1 330 330 B1**
(45) Veröffentlichungstag und Bekanntmachung des Hinweises auf die Patenterteilung: **28.06.2006**
(21) Anmeldenummer: 01992626.0
(22) Anmeldetag: 23.10.2001
(51) Int. Cl.: B23K 11/36, B23K 11/11, B23K 11/31, B23K 37/04, B25B 5/00, B25B 5/14

(54) **VORRICHTUNG ZUM PUNKTUELLEN VERSCHWEISSEN VON WENIGSTENS ZWEI BAUTEILEN**
DEVICE FOR POINT SOLDERING AT LEAST TWO COMPONENTS
DISPOSITIF DE SOUDAGE PONCTUEL D'AU MOINS DEUX COMPOSANTS

(30) Priorität: 23.10.2000 DE 10052509
(43) Veröffentlichungstag der Anmeldung: 30.07.2003
(73) Patentinhaber: IWC - Industrial Weld Consult GmbH i. Gr., 73430 Aalen (DE)
(72) Erfinder: SCHUHEN, Friedrich, Wilhelm, 57520 Steinebach/Sieg (DE)
(74) Vertreter: Schmid, Wolfgang
(86) Internationale Anmeldenummer: PCT/EP2001/012206
(87) Internationale Veröffentlichungsnummer: WO 2002/036299

(56) Entgegenhaltungen:
- DE-A- 3 034 700
- DE-A- 4 417 333
- DE-A- 4 438 621
- DE-A- 19 702 286
- DE-A- 19 805 196
- DE-U- 29 722 276
- US-A- 2 066 791
- US-A- 4 831 228
- US-A- 4 879 447
- US-A- 5 143 361
- PATENT ABSTRACTS OF JAPAN vol. 1995, no. 06, 31. Juli 1995 (1995-07-31) & JP 07 064615 A (TOYOTA MOTOR CORP), 10. März 1995 (1995-03-10)

## Beschreibung

Die Erfindung betrifft eine Vorrichtung zum punktuellen Verschweißen von wenigstens zwei Bauteilen nach der im Oberbegriff von Anspruch 1 (Siehe, z.B., US-A-5 143 361). Des weiteren betrifft die Erfindung eine Anlage zum punktuellen Verschweißen von wenigstens zwei Bauteilen.

Aus der EP 0 640 428 A1 oder der DE 43 23 148 A1 sind Vorrichtungen aus dem allgemeinen Stand der Technik bekannt.

Auch der allgemeine Stand der Technik kennt weitere derartige Vorrichtungen, Anlagen und Verfahren.

Dabei werden zwei miteinander zu verschweißende Bauteile, beispielsweise Karosseriebleche oder dergleichen, an ihren Außenkanten mit einer häufig aus mehreren Spannelementen bestehenden Spanneinrichtung zusammengehalten, um eine Ausrichtung und Fixierung der beiden Bauteile gegeneinander zu erreichen. Anschließend wird eine Schweißzange entlang der Bauteilkanten verfahren und es werden an vorher festgelegten Stellen Schweißpunkte gesetzt. Die Schweißzange kann beispielsweise mit Hilfe eines Handlingsroboters geführt werden, der zuvor mit den notwendigen Bauteildaten programmiert wurde.

Sämtliche der bekannten Vorrichtungen und das damit durchgeführte Verfahren zum Verschweißen von wenigstens zwei Bauteilen sind jedoch dahingehend nachteilig, daß sehr häufig die Spannelemente gelöst werden müssen, um an bestimmten Stellen Schweißpunkte setzen zu können, die man ansonsten nicht erreichen kann. Prinzipiell sind die Vorrichtungen darüber hinaus sehr kompliziert aufgebaut, wodurch auch die entsprechenden Verfahren zeit- und kostenaufwendig sind und dadurch der Aufwand zur Verbindung zweier Bauteile mittels punktuellem Verschweißen sehr hoch ist. Dies gilt insbesondere dann, wenn eine hohe Genauigkeit beim Verbinden der Bauteile erwünscht ist.

Die US 3 632 958 beschreibt einen Elektrodenhalter für Schweißanlagen, welcher eine federbelastete Elektrode aufweist.

Eine elektrische Widerstandsschweißvorrichtung ist aus der DE 33 06 420 C1 bekannt. Dabei wird über ein hydraulisches Medium ein Kolben vorgespannt, anschließend erfolgt eine Verschweißung, worauf der hydraulische Druck wieder abgebaut wird.

Es ist Aufgabe der vorliegenden Erfindung, eine Vorrichtung zum punktuellen Verschweißen von wenigstens zwei Bauteilen sowie eine zugehörige Anlage und ein Verfahren zum punktuellen Verschweißen von wenigstens zwei Bauteilen zu schaffen, durch welches die wenigstens zwei Bauteile in möglichst kurzer Zeit, mit möglichst geringem Kosten- und konstruktivem Aufwand und dabei dennoch prozeßsicher und mit geringen Abweichungen punktuell miteinander verschweißt werden können.

Erfindungsgemäß wird diese Aufgabe durch die in Anspruch 1 genannten Merkmale gelöst.

Eine Anlage zum punktuellen Verschweißen von wenigstens zwei Bauteilen ergibt sich aus den Merkmalen von Anspruch 10.

Mit der erfindungsgemäßen Vorrichtung ist es möglich, vor dem Setzen des ersten Schweißpunktes alle für das spätere Schweißen erforderlichen geometrischen Punkte zu belegen und dann, zeitgleich mit dem Spannen des Bauteils, sämtliche Schweißpunkte in einem Arbeitsgang zu setzen. Diese mögliche Zusammenfassung zweier ansonsten voneinander unabhängiger Arbeitsgänge bringt eine erhebliche Einsparung bezüglich der Taktzeit mit sich, da bei einer entsprechenden Anlage mit mehreren Vorrichtungen die Schweißpunkte nicht mehr aufeinanderfolgend, sondern gleichzeitig gesetzt werden und somit, je nach Größe des Bauteils, eine erheblich schnellere Bearbeitung möglich ist. Diese Verkürzung der Taktzeit wirkt sich selbstverständlich auch auf die Herstellungskosten des betreffenden Werkstückes aus, so daß eventuell höhere Vorrichtungskosten mühelos kompensiert werden können.

Da erfindungsgemäß alle Schweißpunkte gleichzeitig gesetzt werden, müssen die Spannelemente erst nach dem erfolgten Schweißvorgang von dem Bauteil gelöst werden, so daß kein Verrutschen des Bauteils möglich ist und sich eine gleichbleibend hohe Qualität ergibt.

Dies wird dadurch ermöglicht, daß die beiden Elektrodenhalter jeweils ein Preßelement aufweisen und Bestandteile des Spannelementes sind. Hierfür ist lediglich erforderlich, daß die Schweißelektroden gegenüber den Preßelementen beweglich sind und somit während des Schweißvorgangs nachgeführt werden können.

Die Form der miteinander zu verschweißenden Bauteile spielt dabei annähernd keine Rolle, da mehrere erfindungsgemäße Vorrichtungen problemlos zu einer gesamten Anlage zusammengefügt werden können und es auf diese Weise möglich ist, die wichtigsten Stellen, an denen Schweißpunkte zu setzen sind, zu belegen.

Ein großer Vorteil des erfindungsgemäßen Verfahrens ist die Tatsache, daß sich die beiden miteinander zu verschweißenden Bauteile gleichzeitig erwärmen und daher Probleme bezüglich eines eventuellen Verzugs von vornherein ausgeschlossen sind. Da jede Schweißeinrichtung mit dem zugehörigen Paar an Schweißelektroden lediglich für die Herstellung eines Schweißpunktes zuständig ist, ist auch diesbezüglich nur eine geringe Erwärmung zu verzeichnen und es ist demzufolge auch nur eine verhältnismäßig geringe Kühlung notwendig.

Die erfindungsgemäße Nachführeinrichtung, die jedem Spannelement zugeordnet ist, stellt dabei ein korrektes Nachführen der Schweißelektroden sicher und kann vorteilhafterweise für jeden herzustellenden Schweißpunkt bezüglich der Nachstellkraft bzw. -geschwindigkeit individuell angepaßt werden.

In einer vorteilhaften Ausgestaltung der Erfindung kann die Nachführeinrichtung wenigstens zwei Federelemente zum Aufbringen von Druck auf die beiden Schweißelektroden aufweisen, wobei jeweils ein Federelement einer Schweißelektrode zugeordnet ist. Dies stellt eine konstruktiv einfache Ausführungsform der Nachführeinrichtung dar, bei welcher die Federelemente auf die jeweiligen Erfordernisse der miteinander zu verschweißenden Bauteile bzw. der verwendeten Schweißelektroden angepaßt werden können.

Alternativ hierzu kann die Nachführeinrichtung auch ein Medium zum Aufbringen von Druck auf die beiden Schweißelektroden zur Nachführung derselben aufweisen. Durch dieses Medium können hohe Drücke realisiert und in einfacher Weise auf die Schweißelektroden aufgebracht werden.

Schließlich ist es auch möglich, daß die Nachführeinrichtung einen Stellmotor aufweist, der zum Nachführen der Schweißelektroden vorgesehen ist und über eine entsprechende Steuerung eingesetzt werden kann.

Weitere vorteilhafte Ausgestaltungen und Weiterbildungen der Erfindung ergeben sich aus den restlichen Unteransprüchen sowie aus dem nachfolgend anhand der Zeichnung prinzipmäßig dargestellten Ausführungsbeispiel.

Es zeigt:
- Fig. 1: eine Seitenansicht der erfindungsgemäßen Vorrichtung zum punktuellen Verschweißen von wenigstens zwei Bauteilen;
- Fig. 2: eine Draufsicht auf einen Arm des Spannelementes aus Fig. 1;

- Fig. 3: mehrere, eine Anlage zum punktuellen Verschweißen von wenigstens zwei Bauteilen bildende Vorrichtungen aus Fig. 1;
- Fig. 4: eine perspektivische Darstellung einer Nachführeinrichtung für die erfindungsgemäße Vorrichtung;
- Fig. 5: eine Vorderansicht der Nachführeinrichtung aus Fig. 4; und
- Fig. 6: einen Schnitt durch die Nachführeinrichtung nach der Linie VI - VI aus Fig. 5.

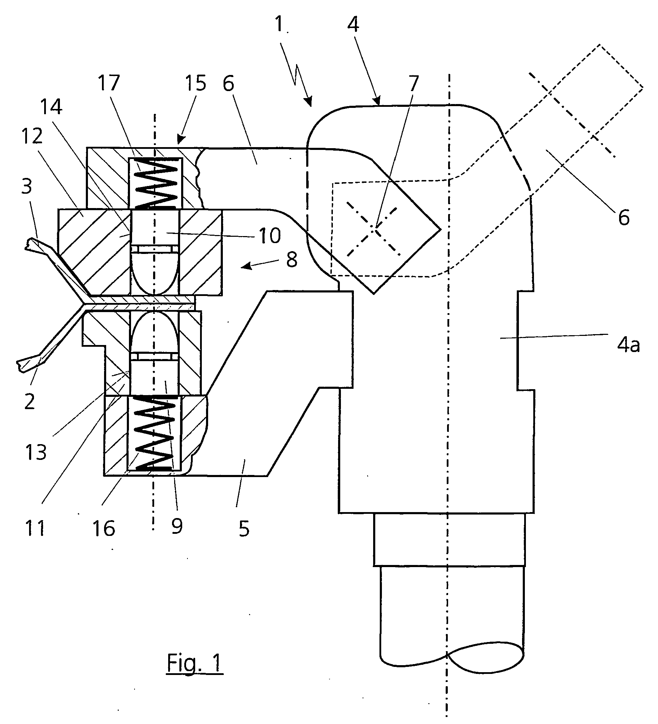

Fig. 1 zeigt eine Vorrichtung 1 zum Verschweißen von zwei Bauteilen 2 und 3. Bei den beiden Bauteilen 2 und 3 handelt es sich im vorliegenden Fall um Karosseriebleche, es können jedoch selbstverständlich auch andersartige und eine andere Anzahl von Bauteilen durch die Vorrichtung 1 miteinander verschweißt werden.

Die Vorrichtung 1 weist ein Spannelement 4 mit einem Grundkörper 4a auf, welches zum Spannen der zwei Bauteile 2 und 3 vorgesehen ist und zu diesem Zweck zwei Arme bzw. Elektrodenhalter 5 und 6 aufweist. Die Elektrodenhalter 5, 6 sind zueinander beweglich, wobei der untere, dem Bauteil 2 zugewandte Elektrodenhalter 5 starr und der obere, dem Bauteil 3 zugewandte Elektrodenhalter 6 um einen Drehpunkt 7 gegenüber dem Grundkörper 4a beweglich ist. Hierzu weist das Spannelement 4 einen nicht dargestellten hydraulisch oder pneumatisch wirkenden Spannzylinder auf, welcher in der Lage ist, den Elektrodenhalter 6 um den Drehpunkt 7 zu bewegen. In Fig. 1 ist der geschlossene Zustand des Spannelementes 4 dargestellt, wobei die geöffnete Stellung des Elektrodenhalters 6 mittels gestrichelter Linien angedeutet ist. Prinzipiell kann das Spannelement 4 als C-Zange oder als X-Zange ausgeführt sein.

An dem Spannelement 4 ist eine Schweißeinrichtung 8 angebracht, welche zwei miteinander zusammenarbeitende Schweißelektroden 9 und 10 aufweist. Die beiden Schweißelektroden 9 und 10 sind somit an dem Spannelement 4 angeordnet, und zwar innerhalb jeweiliger Preßelemente 11 und 12, die beim Spannen der beiden Bauteile 2 und 3 mit denselben in Kontakt stehen und diese zusammenpressen. Die Preßelemente 11 und 12 bieten somit die Andrückfläche für die zum Schweißen erforderlichen Elektrodenkräfte.

Das Preßelement 11 ist dabei an dem Elektrodenhalter 5 angebracht und steht somit in Kontakt mit dem Bauteil 2, wohingegen das Preßelement 12 an dem Elektrodenhalter 6 angeordnet ist und mit dem Bauteil 3 in Kontakt steht. Um die Schweißelektroden 9 und 10 aufnehmen zu können, weisen die Preßelemente 11 und 12 jeweilige Aussparungen 13 und 14 auf, in denen die Schweißelektroden 9 bzw. 10 axial verschieblich angeordnet sind. In nicht dargestellter Weise sind die Schweißelektroden 9 und 10 jeweils mit einem Leitungselement zum Zuführen von elektrischem Strom verbunden, welches jeweils an der den Bauteilen 2 und 3 abgewandten Seite der Preßelemente 11 und 12 angeordnet ist.

Sollen nun die beiden Bauteile 2 und 3 durch die Vorrichtung 1 miteinander punktuell verschweißt werden, so wird zunächst der Elektrodenhalter 6 mit Hilfe des Spannzylinders in die dargestellte Position gebracht, wodurch die Bauteile 2 und 3 fest miteinander verspannt sind. Im selben Arbeitsgang werden die beiden Schweißelektroden 9 und 10 an die Bauteile 2 und 3 angelegt sowie über das zugehörige Leitungselement mit Strom beaufschlagt, worauf die Bauteile 2 und 3 in an sich bekannter Weise im Bereich der beiden Schweißelektroden 9 und 10 zu schmelzen bzw. teigig zu werden beginnen.

Um ein Nachführen der Schweißelektroden 9 und 10 bei diesem Schweißvorgang zu ermöglichen, ist eine Nachführeinrichtung 15 vorgesehen, welche in der dargestellten Ausführungsform zwei Federelemente 16 und 17 aufweist. Das Federelement 16 ist dabei der Schweißelektrode 9 zugeordnet und bringt Druck auf dasselbe auf. Gleiches gilt auch für das Federelement 17, welches der Schweißelektrode 10 zugeordnet ist. Beide Federelemente 16 und 17 weisen eine derartige Federkonstante auf, daß die Schweißelektroden 9 und 10 beim Schmelzen des Materials der beiden Bauteile 2 und 3 automatisch nachgeführt werden und somit eine Punktverschweißung durchgeführt wird. Die beiden Schweißelektroden 9 und 10 werden über eine Zeitdauer von 20 bis 30 ms, vorzugsweise 25 bis 28 ms, bestromt und stehen so lange mit den beiden Bauteilen 2 und 3 in Kontakt.

Außerdem sorgt die Nachführeinrichtung 15 auch dafür, daß der zum Schweißen notwendige Druck auf die beiden Schweißelektroden 9 und 10 aufgebracht wird. Prinzipiell werden die Schweißelektroden 9 und 10 beim Schweißen abhängig von der Dicke und dem Material der Bauteile 2 und 3 sowie von der Stärke des angelegten Stromes um ca. 1 - 5 mm nachgeführt bzw. nachgesetzt.

Alternativ zu den beiden Federelementen 16 und 17 könnte die Nachführeinrichtung 15 in nicht dargestellter Art und Weise auch ein Medium zum Aufbringen von Druck auf die beiden Schweißelektroden 9 und 10 aufweisen. Hier wäre ein flüssiges Medium besonders gut geeignet, welches dann auch gleichzeitig zum Kühlen der Schweißelektroden 9 und 10 eingesetzt werden könnte. Eine derartige Kühlung ist allerdings in den Figuren nicht dargestellt.

Alternativ wären auch Stellmotoren möglich, die die Nachführeinrichtung 15 bilden könnten und wiederum den Schweißelektroden 9 und 10 zum Antrieb derselben zugeordnet wären. Bei sehr hohen Materialstärken der beiden Bauteile 2 und 3 kann die Nachführeinrichtung 15 gegebenenfalls Zusatzelemente aufweisen, um einen entsprechend hohen Druck aufbringen zu können.

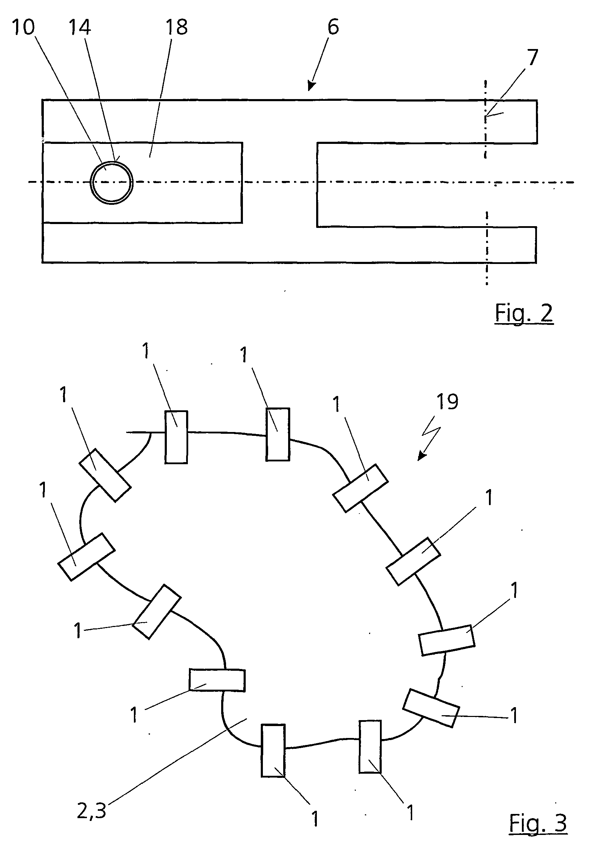

In Fig. 2 ist eine Ansicht auf den oberen Elektrodenhalter 6 des Spannelementes 4 dargestellt, in dem das Preßelement 12 mit der darin sich befindlichen Aussparung 14 zur Aufnahme der Schweißelektrode 10 erkennbar ist. Der Elektrodenhalter 6 weist des weiteren eine Schweißfläche bzw. Kupferfläche 18 auf, die in nicht dargestellter Weise mit dem Leitungselement verbunden ist. Dasselbe gilt analog auch für die in dieser Figur nicht dargestellte Schweißelektrode 9.

Fig. 3 zeigt in sehr schematischer Darstellung eine gesamte Anlage 19 zum punktuellen Verschweißen der beiden Bauteile 2 und 3, welche mehrere in geeigneter Weise angeordnete Vorrichtungen 1 gemäß der Figuren 1 und 2 aufweist. In die Anlage 19 können die beiden Bauteile 2 und 3 eingelegt werden, worauf die Vorrichtungen 1 dieselben wie oben beschrieben miteinander verschweißen.

Hierzu können die Vorrichtungen 1 starr angeordnet sein, um eine Anlage 19 für Bauteile 2 und 3 mit einer bestimmten Kontur zu bilden. Alternativ könnten die Vorrichtungen 1 auch verfahrbar sein und somit eine sehr flexible Anlage 19 zum punktuellen Verschweißen der Bauteile 2 und 3 bilden. Das wenigstens eine Spannelement 4 der Vorrichtung 1 kann dabei jeweils entweder automatisch, d.h. mit einem bereits oben beschriebenen Spannzylinder, oder auch manuell verschließbar sein. Bei manuell verschließbaren Vorrichtungen 1 werden zunächst sämtliche vorhandene Vorrichtungen 1 geschlossen und anschließend wird die Schweißung an allen Punkten gleichzeitig durchgeführt.

Die dargestellte Vorrichtung 1 läßt sich auch zum reinen Verschweißen der beiden Bauteile 2 und 3 verwenden, wobei dann auf die Preßelemente 11 und 12 verzichtet werden kann.

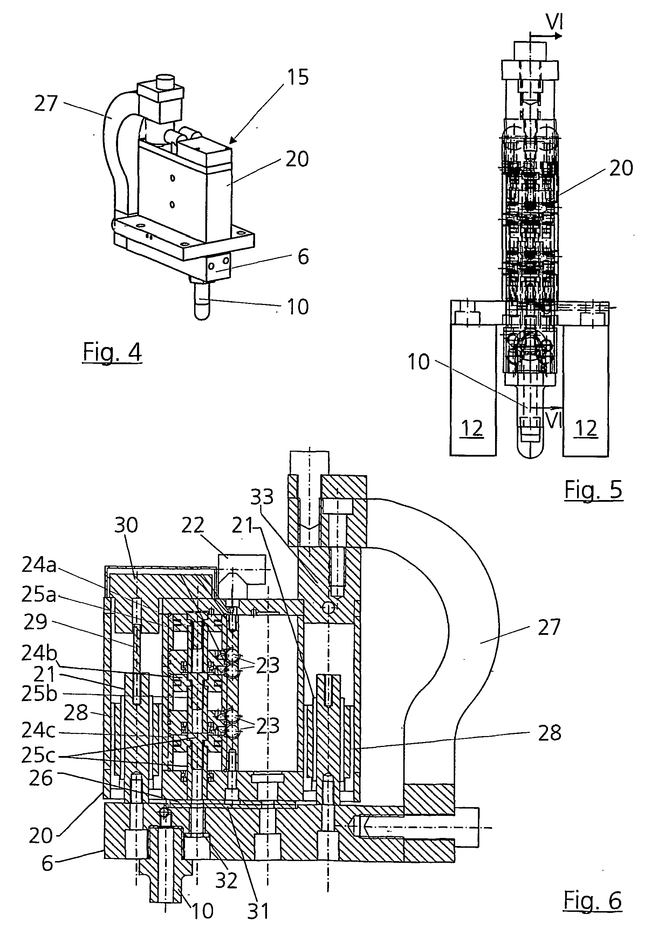

Fig. 4 zeigt eine weitere Ausführungsform der Nachführeinrichtung 15, die ebenfalls zum Aufbringen von Druck auf die beiden Elektrodenhalter 5 und 6 bzw. auf die beiden Schweißelektroden 9 und 10 dient. Die Nachführeinrichtung 15 könnte daher auch als Einrichtung zum Aufbringen von Druck auf den jeweiligen Elektrodenhalter 5 bzw. 6 angesehen werden.

In Fig. 5 ist eine andere Anordnung der Schweißelektrode 10 gegenüber dem Preßelement 12 dargestellt. Demnach besteht das Preßelement 12 aus zwei einzelnen Bauteilen, zwischen denen die Schweißelektrode 10 angeordnet ist.

Wie im Schnitt gemäß Fig. 6 deutlicher zu erkennen ist, weist die Nachführeinrichtung 15 ein Gehäuse 20 auf, an dem über zwei Führungselemente 21 im vorliegenden Fall der obere Elektrodenhalter 6 verschieblich gelagert ist Selbstverständlich kann auch der untere Elektrodenhalter 5 in nicht dargestellter Weise mit einer entsprechend ausgestalteten Nachführeinrichtung 15 versehen sein.

An dem Gehäuse 20 ist eine Zuleitung 22 angebracht, über die beispielsweise Druckluft in das Innere des Gehäuses 20 gelangen kann. Die Nachführeinrichtung 15 wirkt also pneumatisch, könnte jedoch in nicht dargestellter Weise auch hydraulisch oder elektrisch, also beispielsweise mit entsprechenden Motoren, arbeiten. Über mehrere Verteilbohrungen 23 wirkt die Druckluft auf mehrere hintereinander geschaltete Kolben 24a, 24b und 24c, die über mehrere zwischen den jeweiligen Kolben 24a, 24b und 24c angebrachte Kolbenstangen 25a, 25b und 25c den Elektrodenhalter 6 von der Nachführeinrichtung 15 weg bewegen. Zwischen der untersten Kolbenstange 25c und dem Elektrodenhalter 6 ist eine verschleißfeste Tellerfeder 26 angeordnet.

An dem Gehäuse 20 ist des weiteren eine Stromzufuhr 27 für den Elektrodenhalter 6 angeordnet, die jedoch von bekannter Bauart sein kann.

Die beiden Führungselemente 21 sind mittels jeweiliger Isolierhülsen 28 von dem Gehäuse 20 elektrisch isoliert. Des weiteren ist an einem der Führungselemente 21 ein Geber 29 angebracht, der mit einem Wegmeßsystem 30 zusammenarbeitet, um die genaue Position des Elektrodenhalters 6 ermitteln zu können. Auch die Tellerfeder 26, die unterste Kolbenstange 25c und die Stromzufuhr 27 sind mit Isolierelementen 31, 32 bzw. 33 versehen, um das Gehäuse 20 elektrisch von dem Elektrodenhalter 6 zu isolieren.

## Patentansprüche

1. Vorrichtung zum punktuellen Verschweißen von wenigstens zwei Bauteilen (2,3) mit wenigstens zwei zueinander beweglichen Elektrodenhaltern (5,6) zum Halten eines Paares von Schweißelektroden (9,10), die beim Schweißen mit den Bauteilen (2,3) in Kontakt gebracht werden, wobei die beiden Elektrodenhalter (5,6) Bestandteile eines Spannelementes (4) sind, wobei der untere, dem Bauteil (2) zugewandte Elektrodenhalter (5) starr ist
**dadurch gekennzeichnet, dass** die Vorrichtung eine Nachführeinrichtung (15) zum Nachführen der Schweißelektroden (9,10) beim Schweißvorgang, aufweist, wobei die beiden Elektrodenhalter (5,6), jeweils ein Presselement (11,12) aufweisen, wobei die Schweißelektroden (9,10) mittels der Nachführeinrichtung (15) gegenüber den Presselementen (11,12) beweglich sind, und wobei die Presselemente (11,12) jeweils eine Aussparung (13,14) aufweisen, in der die beiden Schweißelektroden (9,10) angeordnet sind, wobei die Schweißelektroden (9, 10) derart innerhalb der Press-elemente (11,12) angeordnet sind, dass beim Spannen der Bauteile (2, 3) die Presskraft auf die Umgebung der Schweißposition übertragen, und dass mittels der Nachführeinrichtung (15) der zum Schweißen notwendige Druck auf die Schweißelektroden (9,10) aufgebracht wird.

2. Vorrichtung nach Anspruch 1,
**dadurch gekennzeichnet, dass** die Nachführeinrichtung (15) wenigstens zwei Federelemente (16,17) zum Aufbringen von Druck auf die beiden Schweißelektroden (9,10) aufweist, wobei jeweils ein Federelement (16,17) einer Schweißelektrode (9,10) zugeordnet ist.

3. Vorrichtung nach Anspruch 2,
**dadurch gekennzeichnet, dass**
die Federelemente (16,17) eine derartige Federkonstante aufweisen, dass beim Schmelzen des Materials der wenigstens zwei Bauteile (2,3) die Schweißelektroden (9,10) automatisch nachgeführt werden.

4. Vorrichtung nach Anspruch 1,
**dadurch gekennzeichnet, dass**
die Nachführeinrichtung (15) ein Medium zum Aufbringen von Druck auf die beiden Schweißelektroden (9,10) zur Nachführung derselben aufweist.

5. Vorrichtung nach Anspruch 4,
**dadurch gekennzeichnet, dass**
das Medium ein flüssiges Medium ist, welches gleichzeitig zum Kühlen der Schweißelektroden (9,10) einsetzbar ist.

6. Vorrichtung nach Anspruch 1,
**dadurch gekennzeichnet, dass**
die Nachführeinrichtung (15) den Schweißelektroden (9,10) zugeordnete Stellmotoren aufweist.

7. Vorrichtung nach einem der Ansprüche 1 bis 6,
**dadurch gekennzeichnet, dass**
das wenigstens eine Spannelement (4) einen hydraulischen oder pneumatischen Spannzylinder aufweist, mittels welchem wenigstens einer der Elektrodenhalter (5,6) bewegbar ist.

8. Vorrichtung nach einem der Ansprüche 1 bis 7,
**dadurch gekennzeichnet, dass**
die beiden Schweißelektroden (9,10) jeweils mit einem Leitungselement zum Zuführen von elektrischem Strom verbunden sind, welches jeweils an der den Schweißelektroden (9,10) abgewandten Seite des Presselementes (11,12) angeordnet ist.

9. Anlage zum punktuellen Verschweißen von wenigstens zwei Bauteilen, welche wenigstens eine Vorrichtung gemäß einem der Ansprüche 1 bis 8 aufweist.

10. Anlage nach Anspruch 9,
**dadurch gekennzeichnet, dass**
die wenigstens eine Vorrichtung (1) starr angeordnet ist.

11. Anlage nach Anspruch 9 oder 10,
**dadurch gekennzeichnet, dass**
die wenigstens eine Vorrichtung (1) verfahrbar ist.

12. Anlage nach einem der Ansprüche 9, 10 oder 11,
**dadurch gekennzeichnet, dass**
das wenigstens eine Spannelement (4) der wenigstens einen Vorrichtung (1) automatisch verschließbar ist.

13. Anlage nach einem der Ansprüche 9 bis 12,
**dadurch gekennzeichnet, dass**
das wenigstens eine Spannelement (4) der wenigstens einen Vorrichtung (1) manuell verschließbar ist.

## Claims

1. Device for spot-welding at least two components (2, 3), comprising at least two electrode holders (5, 6) for holding a pair of welding electrodes (9, 10) and movable with respect to one another, which welding electrodes (9, 10) are brought into contact with the components (2, 3) during welding, the two electrode holders (5, 6) being components of a clamping element (4) and the lower electrode holder (5) facing towards the component (2) being rigid, **characterised in that** the device includes an advancing device (15) for advancing the welding electrodes (9, 10) during the welding process, each of the two electrode holders (5, 6) including a respective pressing element (11, 12), the welding electrodes (9, 10) being movable with respect to the pressing elements (11, 12) by means of the advancing device (15) and the pressing elements (11, 12) each having an opening (13, 14) in which the two welding electrodes (9, 10) are arranged, the welding electrodes (9, 10) being so arranged within the pressing elements (11, 12) that upon clamping of the components (2, 3) the pressure force is transmitted to the area surrounding the weld position, and that the pressure necessary for welding is applied to the welding electrodes (9, 10) by means of the advancing device (15).

2. Device according to claim 1, **characterised in that** the advancing device (15) includes at least two spring elements (16, 17) for applying pressure to the two welding electrodes (9, 10), one spring element (16, 17) being associated with one welding electrode (9, 10) in each case.

3. Device according to claim 2, **characterised in that** the spring elements (16, 17) have a spring rate such that the welding electrodes (9, 10) are automatically advanced as the material of the at least two components (2, 3) fuses.

4. Device according to claim 1, **characterised in that** the advancing device (15) includes a medium for applying pressure to the two welding electrodes (9, 10) for advancing same.

5. Device according to claim 4, **characterised in that** the medium is a fluid medium which can be used at the same time for cooling the welding electrodes (9, 10).

6. Device according to claim 1, **characterised in that** the advancing device (15) includes servo motors associated with the welding electrodes (9, 10).

7. Device according to any one of claims 1 to 6, **characterised in that** at least one clamping element (4) includes a hydraulic or pneumatic clamping cylinder by means of which at least one of the electrode holders (5, 6) is movable.

8. Device according to any one of claims 1 to 7, **characterised in that** each of the two welding electrodes (9, 10) is connected to a respective conductor element for supplying electric current, which conductor element is arranged on the side of the respective pressing element (11, 12) facing away from the welding electrodes (9, 10).

9. Apparatus for spot-welding at least two components which includes at least one device according to any one of claims 1 to 8.

10. Apparatus according to claim 9, **characterised in that** the at least one device (1) is arranged rigidly.

11. Apparatus according to claim 9 or 10, **characterised in that** the at least one device (1) is movable.

12. Apparatus according to any one of claims 9, 10 and 11, **characterised in that** at least one clamping element (4) of the at least one device (1) is closable automatically.

13. Apparatus according to any one of claims 9 to 12, **characterised in that** the at least one clamping element (4) of the at least one device (1) is closable manually.

## Revendications

1. Dispositif pour le soudage ponctuel d'au moins deux pièces (2, 3), comprenant au moins deux porte-électrodes (5, 6) mobiles l'un par rapport à l'autre destinés à tenir deux électrodes de soudage (9, 10) qui sont mises en contact avec les pièces lors du soudage, dans lequel les deux porte-électrodes (5, 6) sont des éléments constitutifs d'un élément de serrage (4), le porte-électrode (5) inférieur, qui est dirigé vers la pièce (2), étant rigide,
**caractérisé en ce que** le dispositif comporte un dispositif de suivi (15) destiné à faire suivre les électrodes de soudage (9, 10) au cours de l'opération de soudage, les deux porte-électrodes (5, 6) comportant chacun un élément presseur (11, 12), les électrodes de soudage (9, 10) pouvant être déplacées par rapport aux éléments presseurs (11, 12) au moyen du dispositif de suivi, et les éléments presseurs (11, 12) étant pourvus chacun d'un évidement (13, 14) dans lequel est disposée une des deux électrodes de soudage (9, 10), les électrodes de soudage (9, 10) étant disposées à l'intérieur des éléments presseurs (11, 12) de telle manière que, lors du serrage des pièces (2, 3), la force de pressage soit transmise à l'entourage de la position de soudage et que la pression nécessaire pour le soudage soit appliquée aux électrodes de soudage (9, 10) au moyen du dispositif de suivi (15).

2. Dispositif selon la revendication 1,
**caractérisé en ce que**
le dispositif suiveur (15) comprend au moins deux éléments à ressorts (16, 17) pour appliquer une pression sur les deux électrodes de soudage (9, 10), un élément à ressort (16, 17) étant associé respectivement à une électrode de soudage (9, 10).

3. Dispositif selon la revendication 2,
**caractérisé en ce que**
les éléments à ressorts (16, 17) présentent une constante élastique telle que, lorsque la matière des au moins deux pièces (2, 3) fond, les électrodes de soudage (9, 10) sont automatiquement amenées à suivre.

4. Dispositif selon la revendication 1,
**caractérisé en ce que**
le dispositif de suivi (15) comprend un milieu destiné à appliquer de la pression sur les deux électrodes de soudage (9, 10) pour que ces dernières suivent.

5. Dispositif selon la revendication 4,
**caractérisé en ce que**
le milieu est un milieu liquide qui peut être utilisé en même temps pour le refroidissement des électrodes de soudage (9, 10).

6. Dispositif selon la revendication 1,
**caractérisé en ce que**
le dispositif de suivi (15) comporte des servomoteurs associés aux électrodes de soudage (9, 10).

7. Dispositif selon l'une des revendications 1 à 6,
**caractérisé en ce que**
le au moins un élément de serrage (4) comprend un cylindre de serrage hydraulique ou pneumatique au moyen duquel au moins un des porte-électrodes (5, 6) peut être déplacé.

8. Dispositif selon l'une des revendications 1 à 7,
**caractérisé en ce que**
les deux électrodes de soudage (9, 10) sont connectées chacune à un élément conducteur destiné à amener du courant électrique et qui est disposé sur le côté de l'élément presseur (11, 12) qui est éloigné des électrodes de soudage (9, 10).

9. Installation pour le soudage ponctuel d'au moins deux pièces, qui comporte au moins un dispositif selon l'une des revendications 1 à 8.

10. Installation selon la revendication 9,
**caractérisée en ce que**
le au moins un dispositif (1) est disposé rigidement.

11. Installation selon la revendication 9 ou 10,
**caractérisée en ce que**
le au moins un dispositif (1) est mobile.

12. Installation selon l'une des revendications 9, 10 ou 11,
**caractérisée en ce que**
le au moins un élément de serrage (4) du au moins un dispositif (1) peut être fermé automatiquement.

13. Installation selon l'une des revendications 9 à 12,
**caractérisée en ce que**
le au moins un élément de serrage (4) du au moins un dispositif (1) peut être fermé manuellement.
